# EUROPÄISCHE PATENTSCHRIFT

(11) **EP 2 591 176 B1**
(45) Veröffentlichungstag und Bekanntmachung des Hinweises auf die Patenterteilung: **04.06.2014**
(21) Anmeldenummer: 11796607.7
(22) Anmeldetag: 04.07.2011
(51) Int. Cl.: E02D 27/42, E02D 27/52, F03D 11/04

(54) **OFFSHORE-ANLAGE, INSBESONDERE WINDKRAFTANLAGE**
OFFSHORE FACILITY, IN PARTICULAR WIND TURBINE
INSTALLATION EN MER, EN PARTICULIER ÉOLIENNE

(30) Priorität: 05.07.2010 DE 102010026117
(43) Veröffentlichungstag der Anmeldung: 15.05.2013
(73) Patentinhaber: Kelemen, Peter, 38239 Salzgitter (DE)
(72) Erfinder: Kelemen, Peter, 38239 Salzgitter (DE)
(74) Vertreter: Friedrich, Andreas
(86) Internationale Anmeldenummer: PCT/DE2011/001404
(87) Internationale Veröffentlichungsnummer: WO 2012/025076

(56) Entgegenhaltungen:
- EP-A2- 1 234 978
- WO-A1-94/06970
- WO-A1-99/51821
- DE-A1- 10 245 078

## Beschreibung

Die Anlage betrifft eine Offshore-Anlage, insbesondere eine Windkraftanlage, mit wenigstens drei Verankerungselementen zum Verankern der Offshore-Anlage an einem Meeresgrund, die in Form eines Hohlkörpers ausgebildet sind, der einen Innenraum umschließt und zu einer Unterseite hin offen ausgebildet ist, wobei in der der Unterseite gegenüberliegenden Oberseite des Hohlkörpers wenigstens eine Austrittsöffnung vorgesehen ist.

Eine derartige Offshore-Anlage ist beispielsweise aus der WO 94/06970 bekannt.

Herkömmlicherweise werden stationäre Offshore-Anlagen im festen Meeresboden dadurch verankert, dass in den Meeresboden Stahlpfähle eingetrieben werden. Wegen der statischen Bestimmtheit ist die Verwendung von genau drei dieser Verankerungen bevorzugt. Diese Verankerungen sind mit Untergestellen verbunden, die beispielsweise mit einer Plattform einen Turm oder einen Mast tragen, an dem das eigentliche Windrad der Windkraftanlage befestigt ist. Selbstverständlich können auch andere Offshore-Anlagen auf diese Weise am Meeresboden verankert werden.

Aus der DE 101 09 428 A1 ist eine Offshore-Windkraftanlage bekannt, die ein Fundament aus einem einzelnen hohlen und nach unten offenen Stahlpfeiler umfasst. Dieser wird in die Erde getrieben und umfasst zudem einen Ballasttank, der mit einem Ballastmaterial gefüllt werden kann, so dass er ein höheres Gewicht aufweist.

Die DE 102 45 078 A1 offenbart eine Windenergieanlage, die in einem oder mehreren Standardcontainern untergebracht werden kann und einen solchen Container als Fundament nutzt. Eine derartige Windkraftanlage ist jedoch nicht zur Verwendung auf hoher See geeignet.

Insbesondere in unruhigen Meeren, wie beispielsweise der Nordsee, in denen hohe Wellengänge und starke Winde regelmäßig auftreten, sind die Offshore-Anlagen hohen Belastungen ausgesetzt, so dass sie extrem stabil ausgebildet und mit der Verankerung verbunden sein müssen. Nachteilig ist, dass dies zum einen die Verankerung einer Offshore-Anlage im Meeresboden technisch aufwendig und damit teuer macht und zum anderen nicht mehr benötigte Offshore-Anlagen nicht restfrei zurückgebaut werden können. Im festen Meeresboden bleiben die Verankerungen zurück, so dass es hier zu einem erheblichen Demontageaufwand und einer Umweltbelastung am Meeresboden kommt.

Der vorliegenden Erfindung liegt daher die Aufgabe zugrunde, eine gattungsgemäße Offshore-Anlage zu verbessern.

Die Erfindung löst die gestellte Aufgabe mit einer gattungsgemäßen Offshore-Anlage, insbesondere einer Windkraftanlage, mit wenigstens drei Verankerungselementen zum Verankern der Offshore-Anlage am Meeresgrund, die in Form eines Hohlkörpers ausgebildet sind, der einen Innenraum umschließt und zu einer Unterseite hin offen ist, wobei in der der Unterseite gegenüberliegenden Oberseite des Hohlkörpers wenigstens eine Austrittsöffnung vorgesehen ist, die sich dadurch auszeichnet, dass sie einen Turmaufbau aufweist, der durch ein Untergestell mit den wenigstens drei Verankerungselementen verbunden ist, wobei der Turmaufbau mit dem Untergestell winkelverstellbar verbunden ist und zwischen dem Turmaufbau und dem Untergestell eine Verstellmöglichkeit vorgesehen ist, mit der eine Winkeljustierbarkeit des Turmaufbaus gegenüber dem Untergestell möglich ist. Dadurch ist es möglich, den Turmaufbau relativ zum Untergestell und damit relativ zu dem wenigstens einen Verankerungselement zu neigen und somit bei einer Schräglage der Offshore-Einrichtung um einen bestimmten Winkel wieder aufzurichten.

Vorteilhafterweise sind bei der Offshore-Anlage genau drei Verankerungselemente vorgesehen, um eine statische Bestimmtheit zu erreichen. Natürlich können in Abhängigkeit vom zugrunde liegenden Meeresboden und den Anforderungen an Stabilität und Widerstandskraft der Offshore-Anlage auch mehr Verankerungselemente verwendet werden.

Soll eine erfindungsgemäße Offshore-Anlage montiert werden, kann sie beispielsweise an Land vorgefertigt werden. Sie wird dann beispielsweise auf Pontons oder selbstschwimmend zum Einsatzort gebracht. Dort wird sie beispielsweise mittels eines Krans angehoben und aufgerichtet. Dabei wird das wenigstens eine Verankerungselement in Form eines unten offenen Hohlkörpers auf den sandigen Meeresboden aufgesetzt. Durch das Eigengewicht der Offshore-Anlage wird die Offshore-Anlage bzw. das wenigstens eine Verankerungselement in die Sandschicht eingedrückt. Durch an der Oberseite der Verankerungselemente vorgesehene Austrittsöffnungen kann sich im Innenraum der Hohlkörper befindendes Wasser den Hohlkörper und damit das Verankerungselement nach oben hin verlassen.

Vorzugsweise wird der wenigstens eine Ballastbehälter beispielsweise mit Meerwasser gefüllt, um das Eigengewicht der Offshore-Anlage zu erhöhen, um so das Einsinken des wenigstens einen Verankerungselementes in die Sandschicht des Meeresbodens zu beschleunigen. Sind für mehrere Verankerungselemente mehrere Ballastbehälter vorgesehen, kann durch eine unterschiedliche Befüllung der Ballastbehälter auch eine unterschiedliche Gewichtsverteilung auf die Verankerungselemente erreicht werden. Damit wird erreicht, dass alle Verankerungselemente gleich schnell in die Sandschicht, die die oberste Schicht des Meeresbodens bildet, einsinken, so dass die Offshore-Anlage gerade steht.

Der Befestigungsart am Meeresgrund liegt dabei die Erkenntnis zugrunde, dass jeder nicht bindige Boden, beispielsweise Sand oder Kies, und begrenzt bindiger Boden, beispielsweise Schluff oder Ton, auf ihn senkrecht wirkende Lasten gut tragen kann. Falls diese senkrechten Lasten betriebsbedingt oszillieren, kommt es bei nicht bindigen Böden zur vorteilhaften Verfestigung. Diese ist begleitet von Setzungen und tritt auch im wassergesättigten Zustand des Bodens auf.

Parallel zum Boden wirkende Lasten werden bei genügenden Auflasten über die Reibung zwischen dem Verankerungselement und dem Meeresboden aufgenommen. In diesem Fall ist eine Gleitsicherheit gegeben. Erst wenn diese Gleitsicherheit nicht mehr sichergestellt werden kann, muss tiefgegründet werden.

Vorteilhafterweise weist jedes Verankerungselement der Offshore-Anlage Rippen auf, die den Innenraum des jeweiligen Verankerungselementes in eine Mehrzahl von Kammern unterteilen, wobei in der Oberseite des Hohlkörpers jedes Verankerungselementes mindestens eine Austrittsöffnung pro Kammer vorgesehen ist. Damit wird sichergestellt, dass aus jeder Kammer das darin enthaltene Wasser beim Absenken der Offshore-Anlage in die Sandschicht des Meeresbodens entweichen kann.

Werden die einzelnen Austrittsöffnungen jeder Kammer eines Verankerungselementes steuerbar ausgestaltet, und ist damit die Austrittsgeschwindigkeit des Wassers aus dieser Kammer regulierbar, kann noch genauer sichergestellt werden, dass die Offshore-Anlage beim Absenken der Verankerungselemente in die Sandschicht des Meeresgrundes gerade steht.

Der wenigstens eine Ballastbehälter kann mit der Offshore-Anlage lösbar verbunden sein. Dies hat den Vorteil, dass er separat zur Einsatzstelle gebracht werden kann, wodurch die Offshore-Anlage selbst weniger ausladend ausgebildet sein kann und so einfacher zu handhaben ist. Der wenigstens eine Ballastbehälter wird entweder vor oder nach dem Aufrichten der Offshore-Anlage mit dieser lösbar verbunden und erst dann beispielsweise mit Meerwasser befüllt. Nachdem die Offshore-Anlage mit ihrem wenigstens einen Verankerungselement tief genug in die Sandschicht des Meeresbodens eingesunken ist, kann der wenigstens eine Ballastbehälter entleert und wieder von der Offshore-Anlage gelöst werden. Er ist dann bereit, an anderen Offshore-Anlagen verwendet zu werden.

Vorteilhafterweise verfügt die Offshore-Anlage über eine Saugvorrichtung zum Absaugen von Wasser aus dem Innenraum des wenigstens einen Verankerungselementes. Dazu kann beispielsweise eine Saugleitung mit der wenigstens einen Austrittsöffnung der Oberseite des Hohlkörpers verbunden sein. Auf diese Weise kann aus dem Hohlkörper des Verankerungselementes oder sogar aus jeder der einzelnen Kammern, sofern das Verankerungselement über Rippen verfügt, das Wasser abgesaugt werden. Dadurch entsteht im Innenraum des Verankerungselementes ein Unterdruck, durch den ein Einsinken des wenigstens einen Verankerungselementes in die Sandschicht des Meeresbodens weiter beschleunigt wird. Das aus dem Innenraum des Hohlkörpers abgepumpte Wasser kann beispielsweise über in einem Untergestell angeordnete Rohrleitungen nach oben geführt und ins Meer abgepumpt werden.
Vorteilhafterweise ist die Saugvorrichtung so ausgestaltet, dass Wasser aus dem Innenraum eines jeden Verankerungselementes separat absaugbar ist. Dadurch kann der im Innenraum eines jeden Verankerungselementes hervorgerufene Unterdruck durch das Absaugen des Wassers einzeln gesteuert und reguliert werden. Die einzelnen Verankerungselemente sinken dann unterschiedlich schnell bzw. unterschiedlich gut in den Meerboden ein. Dies ist insbesondere dann von Vorteil, wenn die Sandschicht, die die oberste Schicht des Meeresbodens bildet, beispielsweise keine homogene Dichte aufweist und so eines der Verankerungselemente langsamer in den Meeresboden einsinken würde als andere. Dadurch, dass der Unterdruck in jedem der Verankerungselemente separat einstellbar ist, kann gewährleistet werden, dass die Offshore-Anlage beim Aufstellen und Verankern am Meeresboden gerade steht.

Doch auch im Betrieb der Offshore-Anlage kann es beispielsweise durch wechselnde Einwirkungen aus Wind, Wellendruck, Wasserströmungen, Kolkbildung und Schiffsberührungen, zu Schiefstellungen und Neigungen der Offshore-Anlage kommen. Dadurch, dass aus jedem Verankerungselement separat Material, insbesondere Wasser, abgesaugt werden kann, kann einer derartigen Neigung der Offshore-Anlage entgegengewirkt werden.

Das gleiche ist natürlich auch durch unterschiedliche Füllung von an der Offshore-Anlage befestigten Ballastbehältern möglich.

Bei einem Verfahren zum Verankern einer beschriebenen Offshore-Anlage am Meeresgrund, dessen oberste Schicht eine Sandschicht ist, wird die Offshore-Anlage mit der Unterseite der wenigstens drei Verankerungselemente nach unten auf die Sandschicht aufgesetzt.

Durch das Eigengewicht der Offshore-Anlage sinkt die Offshore-Anlage bzw. die wenigstens drei Verankerungselemente in die Sandschicht ein und im Innenraum des Hohlkörpers befindliches Wasser entweicht durch die wenigstens eine Austrittsöffnung. Vorteilhafterweise kann das Wasser aus dem Innenraum des Hohlkörpers durch die Saugvorrichtung abgesaugt werden und/oder an der Offshore-Anlage vorgesehene Ballastbehälter mit Ballast befüllt werden Nach dem Einsinken der wenigstens drei Verankerungselemente in die Sandschicht des Meeresbodens kann der wenigstens eine Ballastbehälter wieder entleert und von der Offshore-Anlage getrennt werden. Er kann dann zur Verwendung an einer weiteren Offshore-Anlage verwendet werden.

Durch eine erfindungsgemäße Offshore-Anlage und das Verfahren zum Verankern einer derartigen Anlage am Meeresboden sind weder Bohrungen im Meeresboden erforderlich noch müssen Fremdmaterialien und insbesondere Chemikalien in den Meeresboden eingebracht werden. Vielmehr wird der beschriebene Festhalteeffekt der den Meeresboden bedeckenden Sandschicht ausgenutzt. Die benötigte Standfestigkeit kann dabei durch eine ausreichende Spannweite, also den Abstand zwischen den einzelnen Verankerungselementen, erreicht werden. Durch die Durchdringung der Sandschicht mit Wasser ergibt sich eine kompakte Schicht, aus der die Verankerungselemente nur schwer herausgezogen werden können. Die Haltekraft, die die Offshore-Anlage in ihrer senkrechten Position hält, ergibt sich daher nicht allein aus dem Gewicht der Offshore-Anlage, das von oben auf die Verankerungselemente drückt, sondern auch aus einem Unterdruckeffekt, der dadurch entsteht, dass im Innenraum der Verankerungselemente ein Unterdruck entsteht, wenn die Offshore-Anlage nach oben aus dem Meeresgrund herausgezogen werden soll. Daher ist es sinnvoll, nach dem Verankern der Offshore-Anlage in der Sandschicht des Meeresgrundes die in der Oberseite des Hohlkörpers des Verankerungselementes vorgesehenen Austrittsöffnungen zu verschließen. Bei einer erfindungsgemäßen Verankerung einer Offshore-Anlage müssen daher Zugkräfte nicht durch bauliche Maßnahmen aufgenommen werden, sondern werden durch die physikalischen Eigenschaften des Meeresbodens in Zusammenwirken mit der erfindungsgemäßen Form der Verankerungselemente aufgenommen.

Als Sandschicht im Rahmen der vorliegenden Erfindung wird nicht nur eine aus anorganischem Sand bestehende Schicht angesehen, sondern selbstverständlich auch eine Schicht, die erhebliche organische Bestandteile enthält und die als "Schlickschicht" bezeichnet wird. Eine Schlickschicht weist üblicherweise eine höhere Verdichtung auf als eine reine mineralische Sandschicht und erhöht die Stabilisierung der Offshore-Anlage mit ihren Verankerungselementen aufgrund des Saugeffektes und ist daher für die vorliegende Erfindung besonders gut geeignet.

Berechnungen haben ergeben, dass die Verankerung einer Offshore-Anlage, insbesondere bei Windkraftanlagen, unproblematisch funktioniert, wenn mehrere Verankerungselemente vorgesehen sind, und der Abstand von einer vertikalen Mittenachse der Offshore-Anlage wenigstens ein Sechstel der Höhe der Offshore-Anlage ist. Für diesen Abstand bevorzugt ist etwa ein Drittel der Höhe der Offshore-Anlage.

Die Offshore-Anlage ist vorzugsweise eine Windkraftanlage mit einem ein Windrad tragenden Turmaufbau. Dieser Turmaufbau ist dabei vorzugsweise als Fachwerkkonstruktion ausgebildet, in der die tragenden Elemente durch die auftretenden Kräfte in erster Linie auf Druck und Zug belastet werden, so dass Biegemomente von untergeordneter Bedeutung sind.

Der Turm geht erfindungsgemäß in ein Untergestell über, das vorzugsweise Fußstreben umfasst, deren Abstand voneinander nach unten hin zunimmt und die an ihren unteren Enden die Verankerungselemente aufweisen. Die Verankerungselemente werden dabei vorzugsweise in einer Breite verwendet, die mehr, insbesondere viel mehr als die dreifache Breite der Fußstreben beträgt.

Die bereits beschriebene Verwendung von drei Verankerungselementen hat den Vorteil der statischen Bestimmtheit. Die Verwendung von mehr als drei Verankerungselementen kann jedoch trotz der statischen Überbestimmung für den Verankerungseffekt aufgrund der Saugwirkung innerhalb der Sandschicht vorteilhaft sein.

Da die erfindungsgemäße Offshore-Anlage keine Verankerung im Meeresboden erfordert, kann die Offshore-Anlage komplett und restfrei demontiert werden. Das Herausholen der in die Sandschicht eingesunkenen Verankerungselemente aus der Sandschicht kann durch ein Öffnen der Austrittsöffnungen in der Oberseite des Hohlkörpers und ggf. Einpumpen von Wasser in die Kammern des Verankerungselementes ermöglicht werden. Bleibende Eingriffe in die Struktur und Chemie des Meeresbodens sind nicht erforderlich.

Die Erfindung bietet ferner den Vorteil, dass auf die Offshore-Anlage einwirkende extreme Belastungen nicht durch die Konstruktion allein aufgefangen werden müssen, da es durchaus möglich und zulässig ist, die erfindungsgemäße Offshore-Anlage geringfügig seitlich zu bewegen, so dass beispielsweise bei einem Rammstoß durch ein Schiff die Offshore-Anlage seitlich ausweichen kann. Die auftretenden Kräfte müssen somit nicht allein von der Konstruktion der Offshore-Anlage aufgenommen werden. Dadurch wird die Gefahr von Beschädigungen deutlich herabgesetzt. Ferner ist es möglich, eine leichtere Konstruktion der Offshore-Anlage, beispielsweise eine Fachwerkkonstruktion, einzusetzen und dadurch erheblich Material und Kosten einzusparen.

Die seitliche Verschiebung der Offshore-Anlage erfolgt nur in begrenztem Umfang. Um diese Verschiebungen zu ermöglichen, ist es zweckmäßig, das von der Windkraftanlage in der Sandschicht des Meeresbodens verlegte Meereskabel im Bereich der Windkraftanlage in einer Schleife zu verlegen, damit das Kabel die geringfügigen seitlichen Verschiebungen der Windkraftanlage zerstörungsfrei toleriert.

Anhand einer Zeichnung wird im Folgenden ein Ausführungsbeispiel der vorliegenden Erfindung näher erläutert werden. Es zeigen:
- Fig. 1-: eine perspektivische Ansicht einer Offshore-Windkraftanlage gemäß dem Stand der Technik;
- Fig. 2-: eine perspektivische Ansicht eines Untergestells mit Verankerungselementen einer Offshore-Windkraftanlage gemäß dem Stand der Technik;
- Fig. 3 -: einen Ausschnitt aus einer Schnittzeichnung durch eine Offshore-Anlage gemäß dem Stand der Technik;
- Fig. 4a & 4b: schematische Ansichten eines Verankerungselementes in einer Draufsicht;
- Fig. 5-: eine schematische Seitenansicht einer Offshore-Anlage gemäß einem Ausführungsbeispiel der vorliegenden Erfindung,
- Fig. 6 -: einen schematischen vergrößerten Ausschnitt aus Figur 5,
- Fig. 7 -: eine schematische Draufsicht auf ein Verankerungselement und
- Fig. 8 -: einen Schnitt entlang der Linie VIII-VIII in Figur 7.

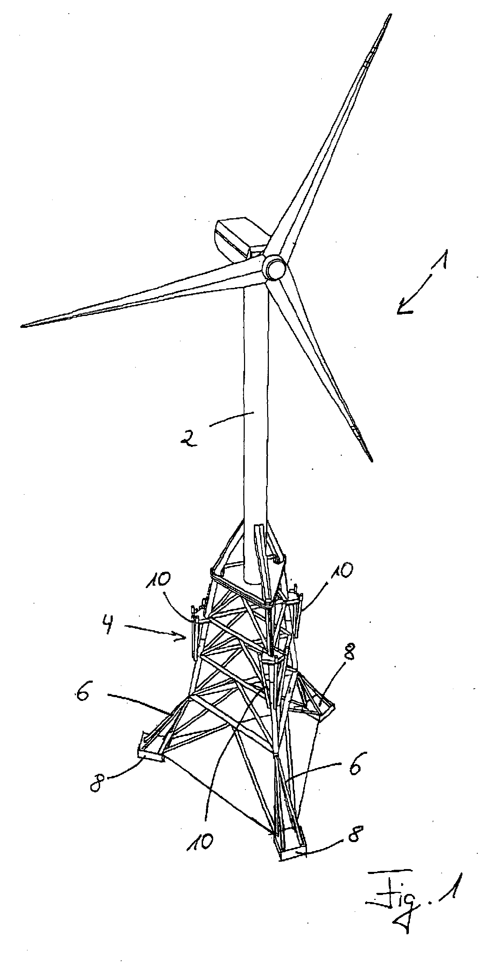

Figur 1 zeigt eine Offshore-Anlage 1. Sie umfasst einen Turmaufbau 2, der an seinem unteren Ende durch ein Untergestell 4, das Fußstreben 6 aufweist, mit Verankerungselementen 8 verbunden ist. Die Offshore-Anlage 1 gemäß Figur 1 weist drei Verankerungselemente 8 auf, die an den Ecken eines gedachten Dreiecks angeordnet sind, um optimale Stabilität der mit ihnen verankerten Offshore-Anlage 1 zu gewährleisten. Am Untergestell 4 befindet sich ein Anprallschutz 10, der die Konstruktion des Untergestells 4 vor eventuellen Kollisionen, beispielsweise mit Schiffen, schützen soll.

Eine Offshore-Anlage 1 gemäß Figur 1 kann ohne Tiefenbohrung oder in den Meeresgrund eingelassene Stahlstreben am Meeresgrund verankert werden, sofern dieser eine Sandschicht aufweist.

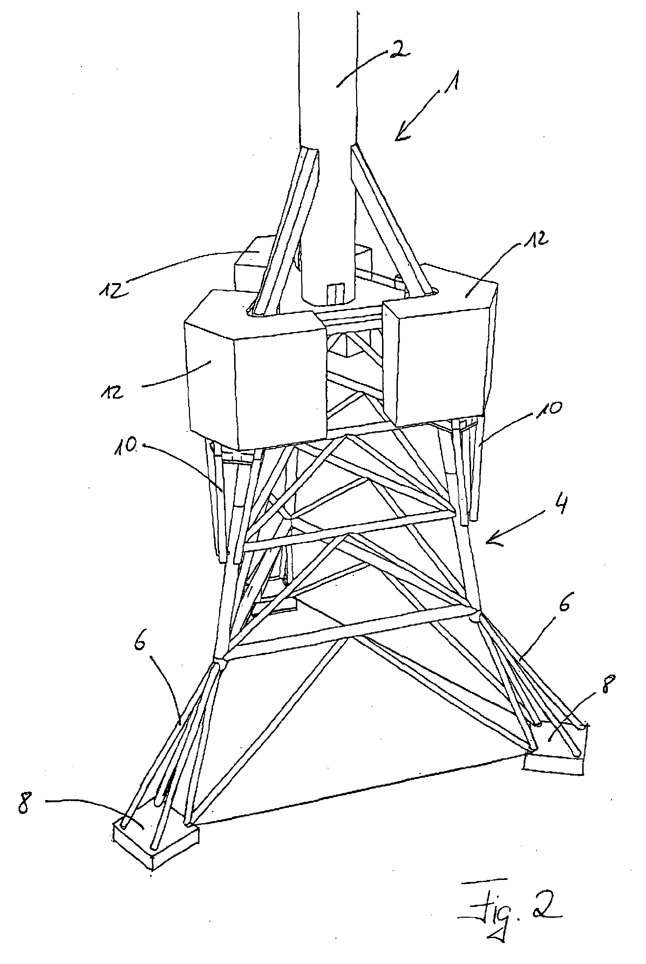

Figur 2 zeigt einen vergrößerten Ausschnitt einer Offshore-Anlage 1 mit einem Turmaufbau 2, einem mit diesem verbundenen Untergestell 4, das Fußstreben 6 aufweist, die mit den Verankerungselementen 8 verbunden sind. Oberhalb des Anprallschutzes 10 befinden sich im in Figur 2 gezeigten Ausführungsbeispiel Ballastbehälter 12, die beispielsweise mit Meerwasser gefüllt werden können.

Soll eine Offshore-Anlage 1 gemäß Figur 2 aufgestellt werden, wird sie zunächst aufgerichtet und mit den Verankerungselementen 8 auf dem sandigen Meeresgrund positioniert. Durch das Eigengewicht der Offshore-Anlage 1 sinken die Verankerungselemente 8 bereits in den sandigen Meeresgrund ein. Dieses Einsinken der Verankerungselemente 8 in den sandigen Meeresboden kann dadurch beschleunigt werden, dass die Ballastbehälter 12 gefüllt werden und so das Eigengewicht der Offshore-Anlage 1 erhöht wird.

Offshore-Anlagen 1 gemäß den Figuren 1 und 2 sind besonders geeignet, in einer Sandschicht, die üblicherweise eine Stärke von 2 bis 4 m aufweist, am Meeresgrund befestigt zu werden. Dabei befindet sich die Sandschicht typischerweise in Meerestiefen von 25 bis 45 m unter dem Meeresspiegel bei Normal Null (NN).

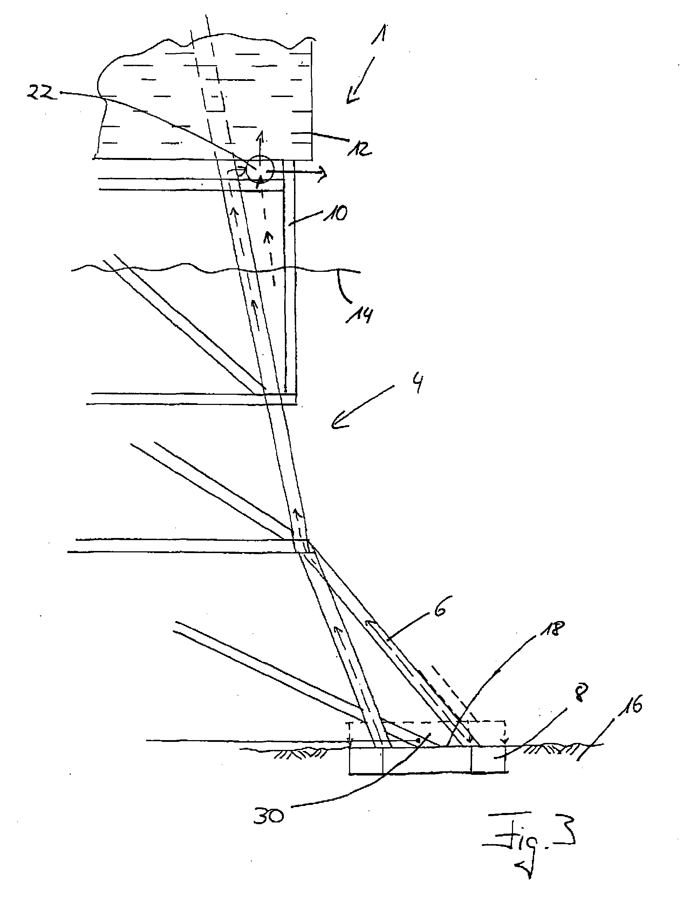

Figur 3 zeigt einen Ausschnitt aus einer Offshore-Anlage 1. Unterhalb der Ballastbehälter 12 ist wieder ein Anprallschutz 10 gezeigt, der, beispielsweise bei Kollisionen mit Schiffen, die Konstruktion schützen soll. Figur 3 zeigt einen Ausschnitt aus einer Offshore-Anlage 1, die bereits auf dem Meeresgrund positioniert ist. Durch die gewellte Linie wird der Meeresspiegel 14 angedeutet. Das Untergestell 4 erstreckt sich unterhalb des Meeresspiegels 14 und ist mit Fußstreben 6 versehen. An ihrem unteren Ende befindet sich ein Verankerungselement 8. Dieses ist mit durchgezogenen Linien bereits im Meeresboden 16 eingesunken gezeichnet. Zuvor wurde es, wie durch gestrichelte Linien angedeutet, auf dem Meeresboden 16 abgesetzt.

An einer Oberseite 18 des Verankerungselementes 8 sind die Fußstreben 6 angeordnet. Sie befinden sich im in Figur 3 gezeigten Ausführungsbeispiel direkt über nicht gezeigten Austrittsöffnungen 20, durch die das Wasser, das sich im mit gestrichelten Linien dargestellten Zustand des Verankerungselementes 8 im Innenraum 30 des Verankerungselementes 8 befindet, aus dem Verankerungselement 8 abgesaugt wird. Dazu befindet sich direkt unterhalb des Ballastbehälters 12 eine Saugvorrichtung 22, durch die das Wasser aus dem Verankerungselement 8 durch die Fußstrebe 6 und die Streben des Untergestells 4 herausgepumpt wird. Der Weg des abgepumpten Wassers ist durch Pfeile in den einzelnen Streben angedeutet. Das von der Saugvorrichtung 22 auf dem Verankerungselement 8 abgepumpte Wasser kann, den Pfeilen folgend, entweder in den Ballastbehälter 12 oder zurück ins Meer gepumpt werden. Durch das Abpumpen des Wassers aus dem Verankerungselement 8 entsteht im Verankerungselement ein Unterdruck, durch den das Einsinken des Verankerungselementes 8 in den Meeresboden 16 beschleunigt wird. Die Saugvorrichtung 22 im in Figur 3 gezeigten Ausführungsbeispiel kann auch verwendet werden, um Meerwasser direkt aus dem Meer in den Ballastbehälter 12 zu pumpen und so das Eigengewicht der Offshore-Anlage zu erhöhen. Auch dadurch wird die Sinkgeschwindigkeit des Verankerungs-elementes 8 in den Meeresboden 16 erhöht.

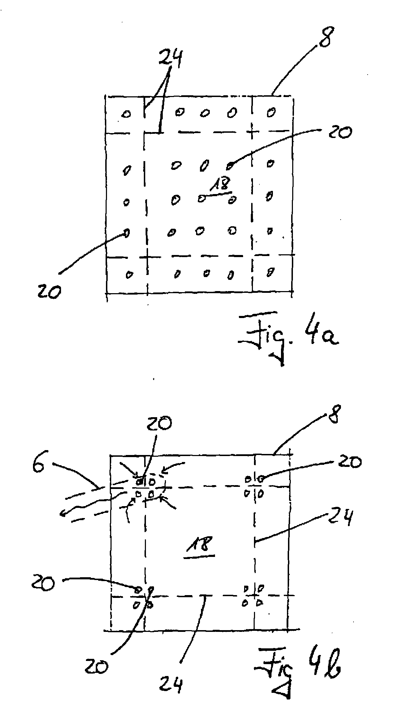

Die Figuren 4a und 4b zeigen zwei schematische Draufsichten auf zwei Verankerungselemente 8 in verschiedenen Ausführungsformen.

In beiden werden durch gestrichelte Linien die unterhalb der sichtbaren Oberseite 18 des Verankerungselementes 8 angeordneten Rippen 24 angedeutet, die den unterhalb der Oberseite 18 des Verankerungselementes 8 liegenden Innenraum in einzelne Kammern unterteilen. In der Oberseite 18 des Verankerungselementes 8 sind jeweils Austrittsöffnungen 20 dargestellt, durch die Wasser aus dem Innenraum des Verankerungselementes durch die Oberseite 18 entweichen kann. Sowohl in Figur 4a als auch in Figur 4b ist für jede Kammer des Innenraums des Verankerungselementes 8, die durch Rippen 24 abgetrennt wird, wenigstens eine Austrittsöffnung 20 vorgesehen.

Im in Figur 4b gezeigten Ausführungsbeispiel ist über vier dieser Austrittsöffnungen 20 mit gestrichelten Linien eine Fußstrebe 6 angedeutet. Hier kann durch eine in der Offshore-Anlage 1 angeordnete Saugvorrichtung 22 Meerwasser aus dem Innenraum des Verankerungselementes abgepumpt und durch die Fußstrebe 6 nach oben befördert werden. Dies ist durch kleine Pfeile in Figur 4b angedeutet.

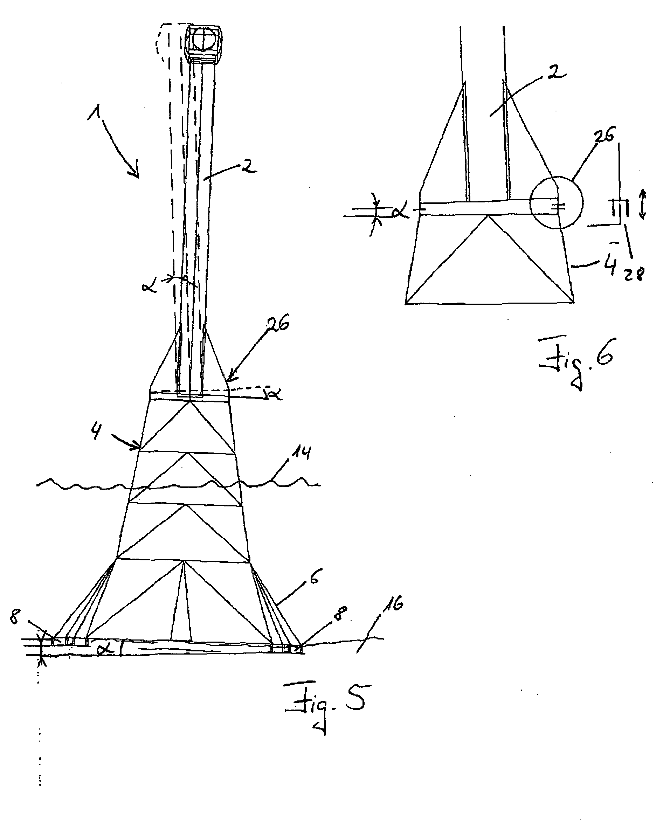

Figur 5 zeigt eine Seitenansicht einer Offshore-Anlage 1 gemäß einem Ausführungsbeispiel der vorliegenden Erfindung. Die Offshore-Anlage 1 ist in durchgezogenen Linien um den Neigungswinkel *α* nach rechts geneigt dargestellt. Eine derartige Neigung kann beispielsweise durch die Einwirkung von Strömungen oder Wind und Wellengang auftreten. Im in Figur 5 gezeigten Ausführungsbeispiel sind beide gezeigten Verankerungselemente 8 noch immer vollständig im Meeresboden 16 versunken. Der Turmaufbau 2 ist jedoch winkelverstellbar mit dem Untergestell 4 verbunden. Die Verbindungsstelle 26 ist in Figur 6 vergrößert gezeigt. An dieser Verbindungsstelle 26 ist zwischen Turmaufbau 2 und dem Untergestell 4 eine Verstellmöglichkeit, beispielsweise mit Hilfe mit Verstellspindeln 28 vorgesehen. Mit ihr ist eine Winkeljustierbarkeit des Turmaufbaus 2 gegenüber dem Untergestell 4 in geringem Umfang möglich. Auf diese Weise ist eine Vertikalausrichtung des Turmaufbaus 2 auch dann möglich, wenn das Untergestell 4 aufgrund der Eigenschaften des Meeresbodens oder der Einwirkung von Wind und Wellen oder Strömungen eine geringe Schräglage aufweist.

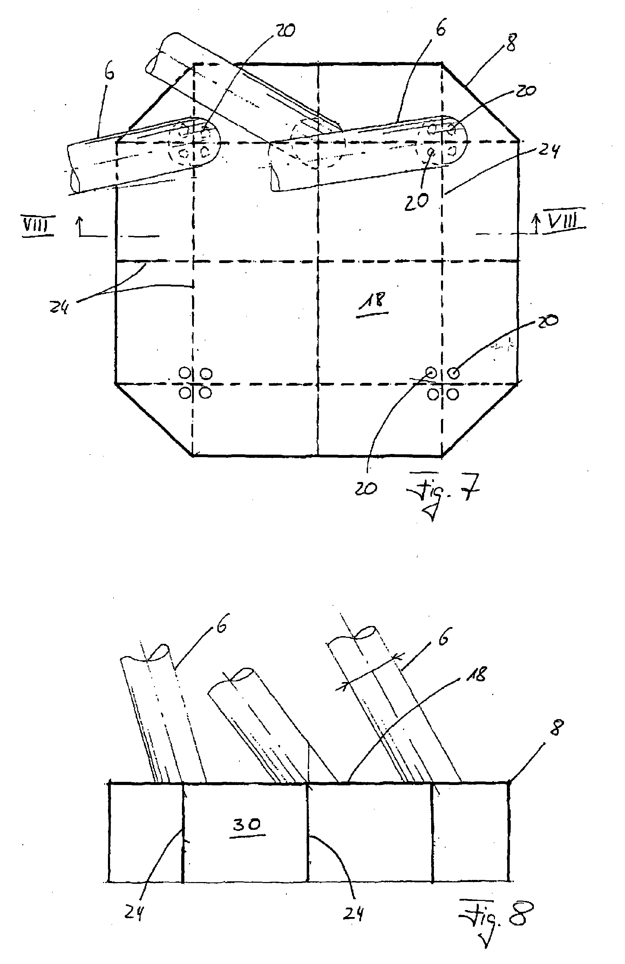

Figur 7 zeigt nochmals eine Draufsicht auf ein Verankerungselement 8. In der sichtbaren Oberseite 18 des Verankerungselementes 8 sind Austrittsöffnungen 20 vorgesehen, durch die Wasser den Innenraum des Verankerungselementes 8 verlassen kann. Der Innenraum ist durch durch gestrichelte Linien angedeutete Rippen 24 in einzelne Kammern unterteilt. Für jede dieser Kammern ist eine Austrittsöffnung 20 vorgesehen, so dass aus jeder dieser Kammern Wasser austreten kann. Im oberen Teil der Figur 7 sind schematisch zwei Fußstreben 6 angedeutet. Diese enden direkt über den Austrittsöffnungen 20, so dass aus den Austrittsöffnungen 20 austretendes Meerwasser durch die Fußstreben 6 nach oben abgeleitet werden kann.

Figur 8 zeigt einen Schnitt durch die Linie VIII-VIII aus Figur 7. Ein Verankerungselement 8 mit einer Oberseite 18, an der zwei Fußstreben 6 angeordnet sind, umfasst einen Innenraum 30. In diesem befindet sich nach dem Aufsetzen des Verankerungselementes 8 auf dem Meeresboden Meerwasser, das durch die in der Oberseite 18 des Verankerungselementes 8 vorgesehene Austrittsöffnungen 20 durch die Fußstreben 6 nach oben abgesaugt wird. Der Innenraum 30 ist durch Rippen 24 in verschiedene Kammern aufgeteilt.

### Bezugszeichenliste:

- *α* -: Neigungswinkel
- 1 -: Offshore-Anlage
- 2 -: Turmaufbau
- 4-: Untergestell
- 6 -: Fußstrebe
- 8 -: Verankerungselement
- 10 -: Anprallschutz
- 12 -: Ballastbehälter
- 14 -: Meeresspiegel
- 16 -: Meeresboden
- 18 -: Oberseite
- 20 -: Austrittsöffnung
- 22 -: Saugvorrichtung
- 24 -: Rippe
- 26 -: Verbindungsstelle
- 28 -: Verstellspindel
- 30 -: Innenraum

## Patentansprüche

1. Offshore-Anlage (1), insbesondere Windkraftanlage, mit wenigstens drei Verankerungselementen (8) zum Verankern der Offshore-Anlage (1) an einem Meeresgrund (16), die in Form eines Hohlkörpers ausgebildet sind, der einen Innenraum (30) umschließt und zu einer Unterseite hin offen ausgebildet ist, wobei in der der Unterseite gegenüberliegenden Oberseite (18) des Hohlkörpers wenigstens eine Austrittsöffnung (20) vorgesehen ist, **dadurch gekennzeichnet, dass** die Offshore-Anlage (1) einen Turmaufbau (2) aufweist, der durch ein Untergestell (4) mit den wenigstens drei Verankerungselementen (8) verbunden ist, wobei der Turmaufbau (2) mit dem Untergestell (4) winkelverstellbar verbunden ist und zwischen dem Turmaufbau (2) und dem Untergestell (4) eine Verstellmöglichkeit vorgesehen ist, mit der eine Winkeljustierbarkeit des Turmaufbaus (2) gegenüber dem Untergestell (4) möglich ist.

2. Offshore-Anlage (1) nach Anspruch 1, **dadurch gekennzeichnet, dass** wenigstens ein Ballastbehälter (12) vorgesehen ist.

3. Offshore-Anlage (1) nach Anspruch 1 oder 2, **dadurch gekennzeichnet, dass** jedes Verankerungselement (8) Rippen (24) aufweist, die den Innenraum (30) des jeweiligen Verankerungselementes (8) in eine Mehrzahl von Kammern unterteilen, wobei in der Oberseite (18) des Hohlkörpers jedes Verankerungselementes (8) mindestens eine Austrittsöffnung (20) pro Kammer vorgesehen ist.

4. Offshore-Anlage (1) nach Anspruch 2 oder 3, **dadurch gekennzeichnet, dass** der wenigstens eine Ballastbehälter (12) mit der Offshore-Anlage (1) lösbar verbunden ist.

5. Offshore-Anlage (1) nach einem der vorstehenden Ansprüche, **dadurch gekennzeichnet, dass** sie eine Saugvorrichtung (22) zum Absaugen von Wasser aus dem Innenraum (30) der wenigstens drei Verankerungselemente (8) aufweist.

6. Offshore-Anlage (1) nach Anspruch 5, **dadurch gekennzeichnet, dass** die Saugvorrichtung (22) so ausgestaltet ist, dass Wasser aus dem Innenraum (30) eines jeden Verankerungselementes (8) separat absaugbar ist.

## Claims

1. Offshore installation (1), in particular a wind turbine, comprising at least three anchoring elements (8) for anchoring the offshore installation (1) on a seabed (16), which anchoring elements are designed in the form of a hollow body which encloses an interior (30) and is designed to be open towards an underside, wherein at least one outlet opening (20) is provided in the upper side (18) of the hollow body situated opposite to the underside, **characterized in that** the offshore installation (1) has a tower superstructure (2) which is connected by an underframe (4) to the at least three anchoring elements (8), wherein the tower superstructure (2) is connected to the underframe (4) in an angularly adjustable manner and an adjustment means is provided between the tower superstructure (2) and the underframe (4), by which means the tower superstructure (2) can be adjusted angularly with respect to the underframe (4).

2. Offshore installation (1) according to Claim 1, **characterized in that** at least one ballast container (12) is provided.

3. Offshore installation (1) according to Claim 1 or 2, **characterized in that** each anchoring element (8) has ribs (24) which subdivide the interior (30) of the respective anchoring element (8) into a multiplicity of chambers, wherein at least one outlet opening (20) per chamber is provided in the upper side (18) of the hollow body of each anchoring element (8).

4. Offshore installation (1) according to Claim 2 or 3, **characterized in that** the at least one ballast container (12) is releasably connected to the offshore installation (1).

5. Offshore installation (1) according to one of the preceding claims, **characterized in that** it has a suction device (22) for sucking off water from the interior (30) of the at least three anchoring elements (8).

6. Offshore installation (1) according to Claim 5, **characterized in that** the suction device (22) is designed in such a way that water can be sucked off separately from the interior (30) of each anchoring element (8).

## Revendications

1. Installation off-shore (1), en particulière installation éolienne, comprenant au moins trois éléments d'ancrage (8) pour ancrer l'installation off-shore (1) au fond de la mer (16), qui sont réalisés sous la forme d'un corps creux, lequel enferme une cavité intérieure (30) et est réalisé ouvert vers une face inférieure, et dans la face supérieure (18) du corps creux, à l'opposé de la face inférieure, il est prévu au moins une ouverture de sortie (20),
**caractérisée en ce que** l'installation off-shore (1) comprend une superstructure (2) en forme de tour, qui est reliée au moyen d'un châssis inférieur (4) avec lesdits au moins trois éléments d'ancrage (8), ladite superstructure (2) en forme de tour étant reliée avec le châssis inférieur (4) de manière réglable sur le plan angulaire, et entre la superstructure (2) en forme de tour et le châssis inférieur (4) il est prévu une possibilité de réglage au moyen de laquelle il est possible d'ajuster la superstructure (2) en forme de tour de manière angulaire par rapport au châssis inférieur (4).

2. Installation off-shore (1) selon la revendication 1, **caractérisée en ce qu'**il est prévu au moins un réservoir ballast (12).

3. Installation off-shore (1) selon la revendication 1 ou 2, **caractérisée en ce que** chaque élément d'ancrage (8) comporte des nervures (24) qui subdivisent la cavité intérieure (30) de l'élément d'ancrage respectif (8) en une pluralité de chambres, et il est prévu au moins une ouverture de sortie (20) par chambre dans la face supérieure (18) du corps creux de chaque élément d'ancrage (8).

4. Installation off-shore (1) selon la revendication 2 ou 3, **caractérisée en ce que** ledit au moins un réservoir ballast (12) est relié de manière détachable à l'installation off-shore (1).

5. Installation off-shore (1) selon l'une des revendications précédentes, **caractérisée en ce qu'**elle comprend un dispositif d'aspiration (22) pour aspirer de l'eau hors de la cavité (30) desdits au moins trois éléments d'ancrage (8).

6. Installation off-shore (1) selon la revendication 5, **caractérisée en ce que** le dispositif d'aspiration (22) est équipé de telle manière que l'eau peut être aspirée séparément hors de la cavité (30) de chaque élément d'ancrage (8).
